# EUROPEAN PATENT SPECIFICATION

(11) **EP 3 704 554 B1**
(45) Date of publication and mention of the grant of the patent: **18.05.2022**
(21) Application number: 18789435.7
(22) Date of filing: 26.10.2018
(51) Int. Cl.: G05D 1/02, G05D 1/04, G08C 17/02, G08G 5/00, G06F 21/44, H04B 7/00, H04W 84/00

(54) **ALLOWING ACCESS TO UNMANNED AERIAL VEHICLES**
ERLAUBEN DES ZUGRIFFS AUF UNBEMANNTE LUFTFAHRZEUGE
AUTORISATION D'ACCÈS À DES VÉHICULES AÉRIENS SANS ÉQUIPAGE

(30) Priority: 03.11.2017 EP 17199936
(43) Date of publication of application: 09.09.2020
(73) Proprietor: IPCom GmbH & Co. KG, 82049 Pullach (DE)
(72) Inventor: SCHMIDT, Andreas, 38124 Braunschweig (DE); BIENAS, Maik, 38170 Schöppenstedt (DE); HANS, Martin, 31162 Bad Salzdetfurth (DE)
(74) Representative: Tomlinson, Edward James
(86) International application number: PCT/EP2018/079373
(87) International publication number: WO 2019/086335

(56) References cited:
- EP-A1- 1 475 610
- WO-A1-2016/210432
- US-A1- 2016 140 851
- KYUNG-NAM PARK ET AL: "Handover Management of Net-Drones for Future Internet Platforms", INTERNATIONAL JOURNAL OF DISTRIBUTED SENSOR NETWORKS, vol. 12, no. 3, 1 January 2016 (2016-01-01), page 5760245, XP055467334, ISSN: 1550-1477, DOI: 10.1155/2016/5760245

## Description

The present invention relates to a framework for the exchange of drone specific data, evaluation of said data by a third party and providing access to the drone for the third party by means of a cellular communication system, e.g. via entities and protocols specified for usage in a cellular communication system according to 3GPP's suite of LTE and LTE-Advanced specifications. The methods may also be realized in upcoming 5G communication standards.

The number of drones (or, unmanned aerial vehicles, UAVs) has been rising. There is already a wide variety of drones available on the market: from light-weight quadcopters (of approx. 20 grams with dimensions in the 10-15 cm range) that are primarily used as toys to heavy-weight octocopters (of approx. 400 grams with dimensions in the 50-60 cm range) that are equipped with sophisticated cameras for hobbyists. Most of these drones can be steered by remote control units in a line-of-sight manner using radio signals in the 2,4 GHz frequency band. Larger and heavier drones for commercial purposes are also available that may utilize other radio signals for flight control. In some cases, the line-of-sight requirement may be dropped for this larger kind of drone.

Example use cases for drones comprise package delivery, search-and-rescue, monitoring of critical infrastructure, wildlife conservation, flying cameras (e.g., for sports event or surveillance). And similar use cases are likely to emerge in the coming years. Many of the before-mentioned use cases would benefit from connecting drones to cellular communication systems (e.g., to LTE networks) as a user equipment (UE). Consequently, more and more of these drones are (or, will be) equipped with UE functionality.

3GPP is also aware of this trend. During RAN Plenary #75 in March 2017 a new study item on "Enhanced Support for Aerial Vehicles" was discussed and approved for the RAN working groups in document RP-170779. The motivation for bringing this study item to 3GPP is the wish to better prepare 3GPP wireless technology for a new kind of interference that is expected to be caused by the steadily growing number of drones.

It can be assumed that the mobile network operator (MNO) has always control over the operation of the cellular modem (in the framework that cellular communication standards, such as LTE, usually provide today) as long as the wireless link between the base station and the UE (or, cellular modem) embedded in or carried by the drone is intact.

However, it cannot be assumed that the MNO also has control over the flight steering and navigation functions of drones that are equipped with UE functionality. For this, an interface between the cellular modem and the drone's flight control unit would have to be in place and the drone steering commands would have to be standardized (or, drone specific steering commands would have to be known on the infrastructure side).

It is desirable to identify drones when these are flying in the air and to define a method to request and/or verify identities and/or certificates that are provided by drones for instance to third parties.

It can be expected that some form of classification will be introduced to distinguish different types of drone as part of a certification process. A first criterion for distinguishing drones might be whether the drone has a UE functionality and a second criterion might be whether the drone is certified for a handover of flight control. Such a classification could result in a table such as that of Table 1 below.

**Table 1**

| | Drone equipped with UE functionality | Drone not equipped with UE functionality. |
|---|---|---|
| Drone supporting handover of flight control. | Class 1 Drone | Class 2 Drone |
| Drone not supporting handover of flight control. | Class 3 Drone | Class 4 Drone |

Currently there are no means specified to disseminate the information such as that according to Table 1 from a drone to potential recipients. Table 1 just serves as an example; it can be easily extended to cover more than two drone related criteria, if needed in future.

Furthermore, it is highly desirable to enable exchange of information between a third party and a drone via a cellular communication network. The state-of-the-art is lacking details for such a behaviour. Furthermore, drone traffic may require special quality of service settings in the network, for example in terms of data rate and/or latency, and a separate billing method.

Kyung-Nam Par et al. in "Handover Management of Net-Drones for Future Internet Platforms", Int. J. Distributed Sensor Networks, 2016, ID 5760245, describes drones providing a WiFi access point with the drones being in communication with a base station.

WO 2016/210432 A1 describes a safety management system for drones using a short message service. A single radio interface is provided which may be cellular, WiFi, Bluetooth or satellite based.

US 2016/0140851 A1, a drone is described having a communication interface in which flight plan information is transmitted in a downlink direction and flight commands and route data are transmitted in an uplink direction.

EP 1 475 610 A1 describes a remotely controllable vehicle in which the vehicle is connected to a remote data transmitting/receiving unit by an infrared, Bluetooth, wireless LAN or cellular connection.

The invention is set forth in the independent claim 1 and the dependent claims 2-11..

The present invention provides a method of enabling a mobile machine to provide information to a device of a recipient, the method comprising the mobile machine transmitting over a first air interface information for enabling access by the device of the recipient for controlling the mobile machine over a cellular mobile communication interface.

The mobile machine may be, for example, an unmanned aerial vehicle, commonly referred to as a drone.

At a general level, this invention describes using a data set for dissemination by drones and its assessment by a third party (e.g., air traffic control, authorities, police, etc.). Furthermore, it deals with the interworking between said third party and a mobile network operator (MNO) based on the data set received and defines two new interfaces for the signalling of drone related data via a cellular communication network. The first new interface is between the cellular modem and the flight control unit inside the drone; the second new interface is between a third-party server and the core network of a cellular communication system.

A first aspect of this invention is the structure of a data set for dissemination by a drone ("digital license plate"). Both the amount and scope of the data to be disseminated by the drone may be at least partially dynamic depending on the situation the drone is in and/or on certain parameters, such as weight of the load carried by the drone, location (altitude) of the drone, projected or actual trajectory of the drone, flight history, and so on. The data set may be transmitted in broadcast mode (e.g., in a recurring manner) over a second air interface (e.g., operating on a first frequency). The data set may comprise information (in particular: access information) relating to (the activation of) a third air interface (e.g., operating on a second frequency) offered by a mobile network operator. The data set may form or be part of information that may be equivalent to a license plate (or, number plate) as used by vehicles on the ground in road traffic. As such the data set may contain a registration number of the drone. Additionally, the data set may comprise information relating to a drone internal interface that enables exchange of data between the UE (cellular modem) and the flight control unit of the drone.

A second aspect of this invention is the assessment of the data set received from a drone by a third party. In the context of the present invention a third party may for instance be an authority (such as the police, fire brigade, air traffic control, military, government, and so on). The analysis of the data set may comprise selection of a cellular communication network. To be more specific, it may comprise the selection of an appropriate interface into an MNO's cellular communication network for the purpose of exchanging drone related information between the third party and the drone in question via the selected radio access technology or cellular communication network (i.e. via the third air interface).

A third aspect of this invention is a negotiation method to enable handover of flight control to the MNO or a third party. Handover of flight control may comprise exchange of flight steering commands and navigation data via the MNO's cellular communication network (i.e. via the third air interface). Handover of flight control may also comprise an exchange of (temporary) flight rules (such as restrictions and policies) for operating the drone (e.g., in a given region) via the MNO's cellular communication network. For the handover of flight control to work properly, we propose to select a suitable set of flight steering commands and/or suitable protocols.

A fourth aspect of this invention is related to quality of service (QoS) settings and the generation of charging data record (CDRs) in the MNO domain so that
the third-party and/or the drone owner can be provisioned with the desired service quality, and
the right person/authority can be billed appropriately for using the infrastructure and connectivity provided by the MNO.

Pieces of information are ideally included in a set of data to be disseminated by drones as a "digital license plate". This data set may be transmitted in broadcast mode via an air interface in a regularly recurring time pattern. The information contained in the data set may then be used to perform (at least one of) the following tasks:
identify a drone;
identify an owner of a drone;
derive information about a drone's type and/or supported features;
derive information about a drone's interworking capabilities with a cellular modem (UE function) deployed on board the drone;
select a mobile network that is offering connectivity to the drone via the third air interface;
exchange information between a third party and the (flight control unit of the) drone via
the selected interface to access the cellular communication network,
the entities and protocols provided by the cellular communication network, and the UE function deployed inside the drone,

The information exchanged may be pertaining to flight steering commands.

A third party is thus enabled (e.g., air traffic control, authorities, police, etc.) to influence flight manoeuvres of drones (possibly overriding the user's flight steering commands received via a different air interface). The third-party can be billed; the MNO can be compensated for providing the infrastructure and connectivity between a third-party and the drone.

Preferred embodiments of the invention will now be described, by way of example only, with reference to the accompanying drawings in which:
Fig. 1 shows a schematic drone architecture with communication interfaces;
Fig. 2 shows an overview of a network architecture including an interface between a device of an authorized receiver and a core network connectable to the drone;
Fig. 3 shows a schematic representation of a connection between a drone and a mobile communication network with an interface in the drone between UE functions and a flight control unit;
Fig. 4 shows how a data set is retrieved via a mobile communications network interface; and
Fig. 5 shows an example set of messages across an Uu air interface of an LTE network.

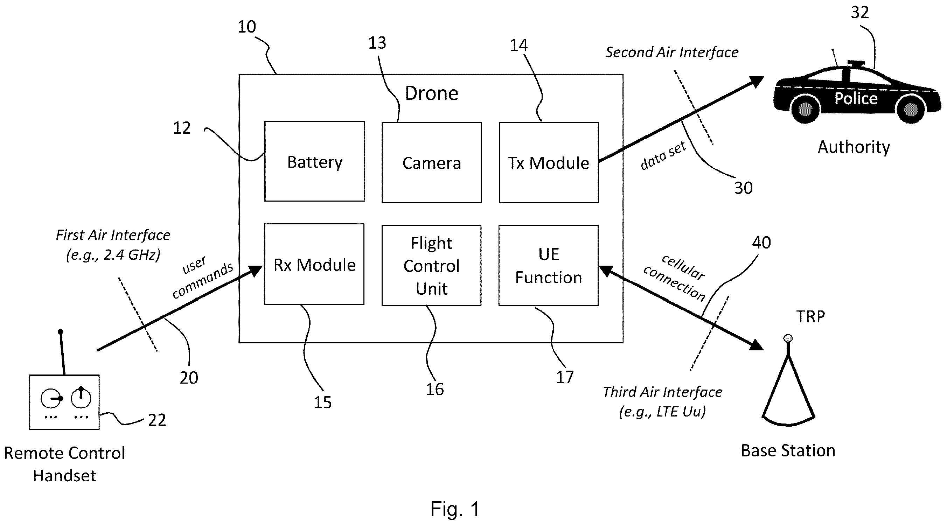

Fig. 1 depicts an example architecture of a drone 10 comprising six functional units 12-17: The functional units comprise a battery 12, a camera 13, a transmit (Tx) module for dissemination of the data set (e.g., via a second air interface 30) 14, a receive (Rx) module 15 to receive flight steering commands from a user (e.g., via a first air interface 20), a flight control unit 16 needed to operate/navigate the drone in the air, and a UE function 17 to connect the drone to a cellular communication system (e.g., via a third air interface 40, that may be an LTE Uu air interface) 17. There may be more functional units or modules deployed inside a drone, but these are not shown in Fig. 1 for the sake of brevity.

The drone 10 has a plurality of communication interfaces as shown in Fig 1 which may be configured as follows. The first air interface 20 may be an air interface between a remote-control handset 22 and the drone 10 realized in unlicensed bands (e.g., in the 2.4 GHz frequency range). It may support unidirectional exchange of flight steering commands from the handset to the drone. In one embodiment, data can be exchanged bi-directionally.

The second air interface 30 represents an air interface between the drone 10 and a third-party receiver 32. Although Fig. 1 shows the receiver 32 in form of a police car, the receiver may be any kind of stationary or mobile receiver of any size and weight. Authorities may even use handheld devices to scan the data set disseminated by the drone via this air interface. Furthermore, the second air interface may support recurring unidirectional transmissions (ideally in broadcast mode) from the drone to one or more third-party receiver(s) located on the ground (or, near ground level).

The third air interface 40 may be an air interface of a cellular communication system (such as the LTE Uu air interface, in case of LTE). It supports bidirectional exchange of information (incl. flight steering commands in one embodiment) from a third party to the drone via the entities and protocols specified for usage in a cellular communication system.

The various functional modules depicted inside the example drone of Fig. 1 may be interconnected with one another (and with further functional modules not shown), e.g. by means of one or more wired connections, e.g. by means of a serial or parallel bus system. Connections between functional modules are not shown in Fig. 1 for sake of simplicity.

An example structure for the data set to be transmitted by a drone as its "digital license plate" e.g., via the second air interface (ideally in broadcast mode) is as follows. Both the amount and scope of the data to be disseminated by the drone may vary, for example in parts, based on the use case or on the situation the drone is in. As such, the number and order of the information elements (IEs) may deviate from the example given below. The data set may be transmitted in an encrypted form such that only recipients able to decrypt the information would be able to act on its contents.

For example, an IE "access credentials" may be used to inform the third-party about which MNO is the correct one to contact, if the third-party would like to exchange data with the drone in question over the air interface offered by a cellular communication system. This IE may carry a destination IP address, authentication data such as a user name or a password, and similar parameters.

For example, an IE "interworking capabilities" may be used to inform the third-party about whether the drone is currently connected or in principle connectable to a cellular communication network, and whether the drone allows adjustment of parameters (for example, flight steering parameters) via the cellular communication network. Possible parameters to be adjusted/set/controlled by a third party via infrastructure elements provided by the MNO are for instance:
The drone's altitude (i.e., the third party may reduce or increase the altitude of the drone, thereby possibly overriding the flight control commands transmitted by a user over the first air interface).
The drone's trajectory (i.e., the third party may force a drone to divert from its current route or to return to a previous location, e.g., one of the locations reported as part of the "location stamping history").
Activation / Deactivation of cameras embedded in or carried by the drone.

In one embodiment of the present invention, the data set to be transmitted by a drone as its "digital license plate" is digitally signed (ideally in a secure processing environment) either in parts or in its entirety with a private key (that is ideally stored in a tamper resistant memory) inside the drone. This may be done to guarantee integrity and authenticity of (the relevant portions of) the data set.

In one embodiment of the present invention, the secure processing environment and/or the tamper resistant memory may be provided by a U(SIM) residing on a UICC (or any other smart card) associated with the cellular modem or by a trusted platform module (TPM).

Table 2 shows an example structure for a data set serving as a "digital license plate" for drones. One or more of the lEs listed there may be directly read from a memory located in the (U)SIM or in the UE, or derived from parameters stored therein. For instance, the IE "Drone-Identifier" may partially or completely comprise the IMEI or IMEI-SV (hardware ID of the cellular modem) or the IMSI (identifier of the subscriber) or a combination of both. Alternatively, the IE "Drone-Identifier" represents a true hardware identifier (registration number) of the drone's hardware.

**Table 2**

| Information Element | Description | | Presence |
|---|---|---|---|
| General Information | | | |
| > Drone-Identifier | This field carries the registration number (Drone-ID). | | Mandatory |
| >Manufacturer-Identifier | Manufacturer of the drone in question | | Optional |
| > Owner of Drone | Company or person owning the drone. | | Optional |
| > Drone Operator | Company or person operating the drone. | | Optional |
| > Type of Drone | Indicating the drone purpose, for which a license was granted, for example: | | Optional |
| | | • package delivery, | |
| | | • search-and-rescue, | |
| | | • monitoring of critical infrastructure | |
| | | • wildlife conversation, | |
| | | • flying cameras, | |
| | | • sports event, | |
| | | • surveillance, | |
| | | • etc. | |
| > Type of License | Indicating the type of license, for example: | | Optional |
| | | • restricted in time, | |
| | | • unrestricted in time, | |
| | | • special government license, | |
| | | • etc. | |
| > Place of Issuance | Country in which the registration number was | | Optional |
| (Nationality) | issued. | | |
| > Issued By | Name or identifier of the authority that has issued this drone license. | | Optional |
| > Date of Issuance | Time and Date of issuance issued of this drone license. | | Optional |
| > Valid Until | Giving a validity time for this drone license. | | Optional |
| Time and Location Details | | | |
| > Location Stamp | Indicating the current 3-dimensional location of the drone (e.g., in form of latitude, longitude and altitude) at the time defined below. May also include speed and heading of the drone. | | Mandatory |
| > Time Stamp | The time of the Location Stamp defined above. | | Mandatory |
| > Location Stamping History | A list of n entries reiterating the n previous location stamps (may be correlated with the "Time Stamping History" information element defined below). | | Optional |
| > Time Stamping History | A list of n entries reiterating the n previous time stamps (may be correlated with the "Location Stamping History" information element defined above). | | Optional |
| > Projected Trajectory | A list of m entries informing about the projected trajectory of the drone (e.g., about its future route, upcoming stops, and/or final destination). This information element may be correlated with the "Projected Timeline" information element defined below. | | Optional |
| > Projected Timeline | A list of m entries informing about the expected points in time when the locations listed in the "Projected Trajectory" information element above may be reached. | | Optional |
| Interworking Capabilities | | | |
| > MNO Connection | Informing the third-party whether this drone is currently connected (or, alternatively, is in principle capable of being connected) to a cellular communication network: | | Mandatory |
| | | • Yes, or | |
| | | • No. | |
| > Handover of Flight Control | | Informing the third-party whether the drone is capable of handing over flight control (via the cellular communication network): | Mandatory |
| | | • Yes, or | |
| | | • No. | |
| > Handover of Camera Control | Informing the third-party whether the drone is capable of handing over camera control (via the cellular communication network): | | Optional |
| | | • Yes, or | |
| | | • No. | |
| > Command Sets | Informing the third-party which command set(s) or protocol(s) is (are) to use, if the third party wants to influence/alter/adjust/control the drone's flight parameters or other functions (via the cellular communication network): | | Optional |
| | | • set #1 (e.g., predefined) / protocol #1, | |
| | | • set #2 (e.g., predefined) / protocol #2, | |
| | | • and so on | |
| > Type of Authority Supported | Indicating what kind of third-party is allowed to take over flight control of the drone (via the connection provided by the cellular communication network): | | Optional |
| | | • air traffic control, | |
| | | • police | |
| | | • fire brigade, | |
| | | • ... | |
| | | • any of the above, | |
| | | • none. | |
| > Drone Class | Alternatively to the lEs "MNO Connection" and "Handover of Flight Control", the Class of the Drone as summarized in Table 1 could be indicated here. | | Optional |
| Access Credentials | | | |
| > MNO-Identifier | Indicating which mobile network operator to contact when data needs to be exchanged between the third-party and a particular drone, for example based on the ITU E.212 standard using: | | Mandatory |
| | | • MCC (Mobile Country Code) | |
| | | • MNC (Mobile Network Code) | |
| > IP Address | IP Address of the Gateway offering access into the MNO Domain for third-parties. | | Mandatory |
| > Port Number | Port Number for accessing the MNO Domain. | | Mandatory |
| > User Name #1 | User name to be used by the third-party to get access into the MNO's domain. | | Optional |
| > Password #1 | Password to be used by the third-party to get access into the MNO's domain. | | Optional |
| > User Name #2 | User name to be used by the third-party to get access to the drone's Flight Control Unit. | | Optional |
| > Password #2 | Password to be used by the third-party to get access to the drone's Flight Control Unit. | | Optional |
| Digital Signature | | | |
| > Signature | Payload for the digital signature. | | Mandatory |
| > Hash Operation | Indicating whether a hash functionality (and which, if there are multiple available) has been applied on the data to be signed. | | Optional |

A mechanism by means of which a third party (for example an authority) is enabled to assess the data set received from the drone via the second air interface will now be described.

The third-party receiver, that may be any kind of stationary or mobile receiver of any size and weight (i.e. the police car in Fig. 1 is just an example), receives the set of data that serves as a "digital license plate" of a drone and starts analysing its content.

From the IE "drone-identifier" the third party is enabled to identify the drone in question. If required (and if the optional lEs are present in the data set), the third party may also choose to learn more about the newly identified flying object, such as
Who is the owner of this drone, e.g. from the IE "owner of drone";
Who is operating this drone, e.g. from the IE "drone operator";
What is its primary field of operation, e.g. from the IEs "type of drone";
What type of license is assigned to this drone, e.g. from the IE "type of license"; and so on.

Furthermore, the third party is enabled to get knowledge of presence or absence of UE functionality onboard the drone, and (if present) about the drone's detailed interworking capabilities with the cellular modem such as
Does the drone have an active cellular connection, e.g. from the IE "MNO connection". If not, would the drone in principle be able to set up a cellular connection, e.g. from the same IE;
Does the drone support handover of flight control to an authority, e.g. from the IE "handover of flight control";
Does the drone support handover of camera control to an authority, e.g. from the IE "handover of camera control";
What command set(s) or protocol(s) is (are) supported by the drone, e.g. from the IE "command sets"; and so on.

All these pieces of information help the third party (i.e. the authority) to decide whether it is worthwhile to try to set up a connection to the newly identified flying object via a cellular communication network. For example, if the third party (i.e. the authority) would like to influence/alter/adjust/control the drone's current or upcoming flight parameters or settings (including change of altitude, speed, heading, trajectory, etc.), or any other drone functionality, such as de-activating or re-activating the built-in camera.

In one embodiment of the present invention the first air interface is a bi-directional interface and the user that has been steering the drone is informed about the fact that a third party is taking over control of the drone.

From the IE "MNO-identifier" the third party is enabled to identify the MNO that is operating the cellular communication network that can be used to get access to the drone via the third air interface. Alternatively, the "MNO-identifier" IE indicates the MNO that the UE functionality inside the drone is subscribed to. If required (and if the optional IEs are present in the data set), the third party may also choose to learn more about how to get access to the newly identified flying object via the infrastructure components provided by the MNO, such as
What IP address to use to access the MNO domain, e.g. from the IE "IP address";
What user name to use, e.g. from the IE "User Name #1";
What password to use, e.g. from the IE "Password #1";

Finally, the third party (i.e. the authority) can exchange information (including flight steering commands, camera commands, and so on) between its servers and the (flight control unit of the) drone via
the selected cellular communication network, and
the UE function deployed inside the drone,
and the third party may use command sets and/or protocols that the drone actually supports.

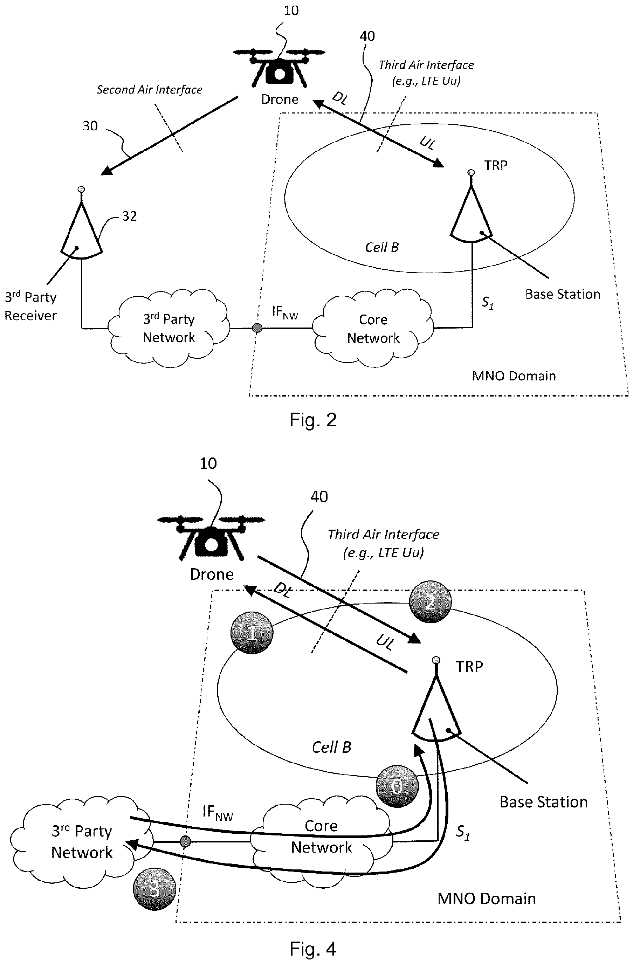

Fig. 2 shows entities which may be involved in the method of the invention: the drone, the 3^{rd} party receiver, the 3^{rd} party network, the MNO's core network, and the MNO's radio access network with at least one base station. The interface to access the MNO domain is the IF_{NW} interface located between the 3^{rd} party network and the MNO's core network.

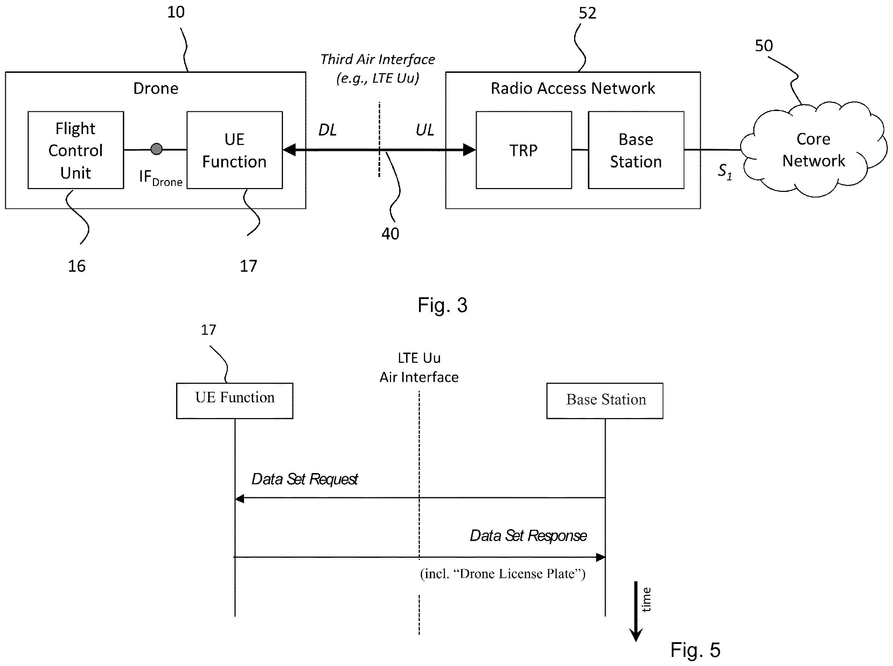

Fig. 3 shows an interface IF_{Drone} between the UE function 17 and the flight control unit 16 inside the drone 10. The UE function 17 is connected to the core network 50 via a radio access network 52 over the third air interface 40 which may be an LTE Uu interface.

As indicated above, a third aspect of this invention is a method for negotiating to enable handover of drone control to the MNO or to a third party based on the data set received from the drone. Handover of control may for instance be reliant on certain capabilities (e.g., indicated by means of the IEs "handover of flight control" and "handover of camera control" as discussed above) and/or on certain conditions (e.g., location/altitude/heading/etc. of the drone, owner of the drone, type of third party, and so on). Handover of drone control may for instance comprise handover of only a subset of drone control (for example related to flight control, camera control, and so on) or of the entire range of control options.

Handover of flight control may comprise exchange of flight steering commands and navigation data via the MNO's cellular communication network (i.e. via the third air interface). Flight control commands can be issued either by the third party or by the MNO.

Activation / deactivation of a camera embedded in or attached to a drone may comprise exchange of camera steering commands via the MNO's cellular communication network (i.e. via the third air interface). Camera control commands can be issued either by the third party or by the MNO.

The two control options "flight control" and "camera control" are not meant to be restrictive in any way. Instead these two terms only serve as examples for a broad range of drone control options.

For a handover of control to work properly, a suitable set of command sets and/or suitable protocols is selected from a pool of predefined command sets and/or protocols. If the protocols are not implemented or if the control commands are not known on one side (e.g., in the drone or on infrastructure side), handover of drone control may have to be aborted. As mentioned above, the MNO and/or the third party is enabled to learn from the data set received from the drone what command set(s) or protocol(s) is (are) supported by the drone.

The fourth aspect of the present invention referred to above is the determination of QoS settings and generating charging and data records, CDRs.

The traffic exchanged between a third-party network and the drone (so-called "3^{rd} party traffic") may be handled differently from the exchange of "legacy" traffic, for example in terms of
Quality of service (QoS) settings; and/or
Number and type of entities involved in the exchange of data; and/or
Generation of charging data records (CDR); etc.

In one embodiment, "3rd party traffic" is given high priority over "legacy traffic" in the MNO domain. In another embodiment, entities in the MNO domain are configured to pick a certain QoS class (e.g., according to the QCI values defined in 3GPP TS 23.203) in order to provide a fast and/or ultra-reliable data connection for "3rd party traffic".

For instance, the triple of priority, packet delay budget, and packet error loss rate defining a certain QoS Class could be configured as follows: The priority could be set to 2.5, the packet delay budget could be around a value of 50ms and the packet error loss rate could be around a value of 10⁻³ for a new QoS Class termed "XY" (cf. Table 3 showing standardized QCI characteristics enhanced for drone operation, cf Table 6.1.7 in 3GPP TS 23.203).

**Table 3**

| QCI | Resource Type | Priority Level | Packet Delay Budget (NOTE 13) | Packet Error Loss Rate (NOTE 2) | Example Services |
|---|---|---|---|---|---|
| 1 | I GBR I | 2 | 100 ms | 10⁻² | Conversational Voice |
| 2 | | 4 | 150 ms | 10⁻³ | Conversational Video (Live Streaming) |
| 3 | | 3 | 50 ms | 10⁻³ | Real Time Gaming, V2X messages |
| XY | | 2,5 | 50ms | 10⁻³ | Drone messages |
| 4 | | 5 | 300 ms | 10⁻⁶ | Non-Conversational Video (Buffered Streaming) |
| 65 | | 0.7 | 75 ms | 10⁻² | Mission Critical user plane Push To Talk voice (e.g., MCPTT) |
| 66 | | 2 | 100 ms | 10⁻² | Non-Mission-Critical user plane Push To Talk voice |
| 75 | | 2.5 | 50 ms | 10⁻² | V2X messages |

In yet another embodiment, separate CDRs are generated in the MNO domain to bill the third party rather than the subscriber for the traffic caused by the third party (potentially plus an additional service fee).

The previous figures show the transmission of the data set over the second air interface. Alternatively, the data set may be conveyed over the third air interface, either upon request of the mobile network operator (cf. arrows 1 and 2 in Fig. 4), who may in turn react on a request received from a third party via the IF_{NW} interface (cf. arrow 0), or initiated by the UE function deployed inside the drone (in this case arrow 2 is not a response to arrow 1 and arrow 1 may be an acknowledgement of the data set transmitted with arrow 2). The content of the data set ("digital license plate") may be forwarded to the third party (cf. arrow 3).

For the request/response pair of messages used on the third air interface (e.g., the LTE Uu interface, in case of LTE) a new pair of messages, for example RRC messages, may need to be defined, or an existing pair of messages may be enhanced. Fig. 5 depicts the former variant: The "data set request" RRC message represents arrow 1 and the "data set response" RRC message, that may contain the "digital license plate" information according to Table 2 (either in parts or in its entirety), represents arrow 2.

The "drone-identifier" IE listed in Table 2 may comprise (or, may be derived or derivable from) identifiers that are used in the mobile communication system. For instance, in a mobile communication system according to 3GPP the drone-identifier may comprise or contain the IMEI or IMEI-SV (hardware identifier of the cellular modem) or the IMSI (identifier of the subscriber) either in parts or in entirety.

The names and encoding variants of the messages and/or information elements (IE) discussed above shall be understood to merely serve as examples. There are many other options to exchange the information between the entities involved as well as for the encoding of parameters and their values fields.

Furthermore, the parameters we propose to be used may be assorted in one way or another. For example, they may be collated in a new or already existing hierarchical structure, or grouped together with other information elements (IE) for instance in form of a list.

Furthermore, the teachings of the present invention are not restricted to drones, instead they may apply to any other type of movable objects, including vehicles on the ground or on water.

## Claims

1. A method of enabling a mobile machine (10) to provide information to a device (32) of a recipient, **characterized in that** the method comprises the mobile machine transmitting over a first air interface (30) information for enabling access by the device of the recipient for controlling the mobile machine over a cellular mobile communication interface (40).

2. The method according to claim 1 wherein the information is used to obtain at least one of, and optionally a plurality of in any combination, an identification of the mobile machine, an identification of an owner of the mobile machine, an identification of a type of the mobile machine and capabilities supported by the mobile machine, an identification of interworking capabilities of the mobile machine with a cellular modem, a selection of a mobile communications network for enabling connectivity to the mobile machine.

3. The method according to claim 1 or claim 2, wherein the information is transmitted in a broadcast mode.

4. The method according to any preceding claim, wherein the information is of a nature such that the information may change with time.

5. The method according to any one of claims 1 to 3, wherein the information consists of a registered identity of the mobile machine enabling the recipient to obtain information for controlling the mobile machine from a secure repository.

6. The method according to any preceding claim, wherein the mobile machine is an unmanned aerial vehicle and the information is used such that the device of the recipient is able to perform a negotiation method to enable a handover of flight control.

7. The method according to any one of claims 1 to 5, wherein the mobile machine is an unmanned aerial vehicle and the information is used such that the device of the recipient is able to perform a negotiation method to enable a handover of control of a camera associated with the unmanned aerial vehicle.

8. The method according to claim 6 or claim 7, wherein the information includes an identifier of a mobile network operator for identifying the mobile network operator which is operating a cellular communication network that can be used to gain access to the unmanned aerial vehicle via the cellular mobile communication interface and commands are exchanged between the device of the recipient and the unmanned aerial vehicle over the cellular mobile communication interface and a user equipment function deployed inside the unmanned aerial vehicle.

9. The method according to any one of claims 6 to 8, wherein the information includes at least one of information about an altitude of the vehicle, a trajectory of the vehicle and an activation state of a camera associated with the vehicle.

10. The method according to any preceding claim wherein the information is used to establish a quality of service setting for communications between the mobile machine and the device of the recipient.

11. The method according to any preceding claim, wherein the information is used to generate charging date records for communications between the mobile machine and the device of the recipient.

## Patentansprüche

1. Verfahren, um einer mobilen Maschine (10) zu ermöglichen, einer Vorrichtung (32) eines Empfängers Informationen bereitzustellen,
**dadurch gekennzeichnet, dass**
das Verfahren umfasst, dass die mobile Maschine Informationen über eine erste Luftschnittstelle (30) überträgt, um Zugriff durch die Vorrichtung des Empfängers zum Steuern der mobilen Maschine über eine zelluläre mobile Kommunikationsvorrichtung (40) zu ermöglichen.

2. Verfahren nach Anspruch 1, wobei die Informationen verwendet werden, um mindestens eines, und wahlweise eine Vielzahl in einer beliebigen Kombination von einer Identifizierung der mobilen Maschine, einer Identifizierung eines Eigentümers der mobilen Maschine, einer Identifizierung eines Typs der mobilen Maschine und von Fähigkeiten, die von der mobilen Maschine unterstützt werden, einer Identifizierung von Zusammenarbeitsfähigkeiten der mobilen Maschine mit einem zellulären Modem, einer Auswahl eines mobilen Kommunikationsnetzwerks zum Ermöglichen von Konnektivität mit der mobilen Maschine zu erhalten.

3. Verfahren nach Anspruch 1 oder Anspruch 2, wobei die Informationen in einem Rundrufmodus übertragen werden.

4. Verfahren nach einem vorstehenden Anspruch, wobei die Informationen solcher Art sind, dass sich die Informationen im Laufe der Zeit ändern können.

5. Verfahren nach einem der Ansprüche 1 bis 3, wobei die Informationen aus einer eingetragenen Identität der mobilen Maschine bestehen, die dem Empfänger ermöglicht, Informationen zum Steuern der mobilen Maschine von einem sicheren Repository aus zu erhalten.

6. Verfahren nach einem vorstehenden Anspruch, wobei die mobile Maschine ein unbemanntes Luftfahrzeug ist und die Informationen derart verwendet werden, dass die Vorrichtung des Empfängers imstande ist, ein Verhandlungsverfahren durchzuführen, um eine Flugsteuerungsübergabe zu ermöglichen.

7. Verfahren nach einem der Ansprüche 1 bis 5, wobei die mobile Maschine ein unbemanntes Luftfahrzeug ist und die Informationen derart verwendet werden, dass die Vorrichtung des Empfängers imstande ist, ein Verhandlungsverfahren durchzuführen, um eine Steuerungsübergabe einer mit dem unbemannten Luftfahrzeug verknüpften Kamera zu ermöglichen.

8. Verfahren nach Anspruch 6 oder Anspruch 7, wobei die Informationen einen Identifikator eines Betreibers eines mobilen Netzwerks einschließen, um den Betreiber des mobilen Netzwerks zu identifizieren, der ein zelluläres Kommunikationsnetzwerk betreibt, das verwendet werden kann, um Zugriff auf das unbemannte Luftfahrzeug über die zelluläre mobile Kommunikationsschnittstelle zu erhalten, und Befehle zwischen der Vorrichtung des Empfängers und dem unbemannten Luftfahrzeug über die zelluläre mobile Kommunikationsschnittstelle und einer innerhalb des unbemannten Luftfahrzeugs eingesetzten Benutzerausrüstungsfunktion ausgetauscht werden.

9. Verfahren nach einem der Ansprüche 6 bis 8, wobei die Informationen mindestens eines von einer Information über eine Höhe des Fahrzeugs, einer Bahn des Fahrzeugs und einem Aktivierungsstatus einer mit dem Fahrzeug verknüpften Kamera einschließen.

10. Verfahren nach einem vorstehenden Anspruch, wobei die Informationen verwendet werden, um eine Dienstqualitätseinstellung für Kommunikationen zwischen der mobilen Maschine und der Vorrichtung des Empfängers festzulegen.

11. Verfahren nach einem vorstehenden Anspruch, wobei die Informationen verwendet werden, um Ladedatumsaufzeichnungen für Kommunikationen zwischen der mobilen Maschine und der Vorrichtung des Empfängers zu erzeugen.

## Revendications

1. Procédé pour permettre à une machine mobile (10) de fournir des informations à un dispositif (32) d'un destinataire,
**caractérisé en ce que**
le procédé comprend la machine mobile transmettant sur une première interface d'air (30) des informations pour autoriser l'accès par le dispositif du destinataire pour commander la machine mobile sur une interface de communications mobiles cellulaires (40).

2. Procédé selon la revendication 1, dans lequel les informations sont utilisées pour obtenir au moins une parmi, et facultativement une pluralité de, dans toute combinaison, une identification de la machine mobile, une identification d'un propriétaire de la machine mobile, une identification d'un type de la machine mobile et de capacités supportées par la machine mobile, une identification de capacités d'interfonctionnement de la machine mobile avec un modem cellulaire, une sélection d'un réseau de communications mobiles pour permettre la connectivité à la machine mobile.

3. Procédé selon la revendication 1 ou la revendication 2, dans lequel les informations sont transmises dans un mode de diffusion.

4. Procédé selon une quelconque revendication précédente, dans lequel les informations sont d'une nature telle que les informations peuvent changer avec le temps.

5. Procédé selon l'une quelconque des revendications 1 à 3, dans lequel les informations consistent en une identité enregistrée de la machine mobile permettant au destinataire d'obtenir des informations pour commander la machine mobile depuis un dépôt sécurisé.

6. Procédé selon une quelconque revendication précédente, dans lequel la machine mobile est un véhicule aérien sans équipage et les informations sont utilisées de sorte que le dispositif du destinataire soit capable d'effectuer un procédé de négociation pour permettre un transfert de commande de vol.

7. Procédé selon l'une quelconque des revendications 1 à 5, dans lequel la machine mobile est un véhicule aérien sans équipage et les informations sont utilisées de sorte que le dispositif du destinataire soit capable d'effectuer un procédé de négociation pour permettre un transfert de commande d'une caméra associée au véhicule aérien sans équipage.

8. Procédé selon la revendication 6 ou la revendication 7, dans lequel les informations incluent un identifiant d'un opérateur de réseau mobile pour identifier l'opérateur de réseau mobile qui fait fonctionner un réseau de communications cellulaires qui peut être utilisé pour obtenir l'accès au véhicule aérien sans équipage par l'intermédiaire de l'interface de communications mobiles cellulaires et des commandes sont échangées entre le dispositif du destinataire et le véhicule aérien sans équipage sur l'interface de communications mobiles cellulaires et une fonction d'équipement utilisateur déployée à l'intérieur du véhicule aérien sans équipage.

9. Procédé selon l'une quelconque des revendications 6 à 8, dans lequel les informations incluent au moins une parmi des informations concernant une altitude du véhicule, une trajectoire du véhicule et un état d'activation d'une caméra associée au véhicule.

10. Procédé selon une quelconque revendication précédente, dans lequel les informations sont utilisées pour établir une qualité de réglage de service pour des communications entre la machine mobile et le dispositif du destinataire.

11. Procédé selon une quelconque revendication précédente, dans lequel les informations sont utilisées pour générer des enregistrement de date de charge pour des communications entre la machine mobile et le dispositif du destinataire.
